# EUROPÄISCHE PATENTSCHRIFT

(11) **EP 2 619 371 B1**
(45) Veröffentlichungstag und Bekanntmachung des Hinweises auf die Patenterteilung: **23.05.2018**
(21) Anmeldenummer: 11808146.2
(22) Anmeldetag: 21.09.2011
(51) Int. Cl.: E02B 3/10, E04H 9/14

(54) **HOCHWASSERSCHUTZWAND**
FLOOD BARRIER
PROTECTION CONTRE LES CRUES

(30) Priorität: 24.09.2010 DE 102010046504
(43) Veröffentlichungstag der Anmeldung: 31.07.2013
(73) Patentinhaber: Wibbeler, Hartmut, 48155 Münster (DE)
(72) Erfinder: Wibbeler, Hartmut, 48155 Münster (DE)
(74) Vertreter: Vomberg, Friedhelm
(86) Internationale Anmeldenummer: PCT/DE2011/001755
(87) Internationale Veröffentlichungsnummer: WO 2012/041281

(56) Entgegenhaltungen:
- EP-A1- 0 586 364
- WO-A1-02/44502
- DE-A1-102005 008 461
- DE-A1-102007 040 744
- DE-A1-102008 036 752
- GB-A- 2 397 086
- GB-A- 2 450 875

## Beschreibung

Die Erfindung betrifft eine Hochwasserschutzwand mit in ortsfest angeordneten Aufnahmen eingesetzte Pfosten und mindestens einem Wandelement, das in einer im Boden versenkten ortsfesten und im Querschnitt zumindest im Wesentlichen U-förmigen Wanne angeordnet und zur Bildung einer Schutzwand hochziehbar und mit dem Pfosten verbindbar ist, wobei das Wandelement zumindest teilweise aus einem flexiblen Material besteht, nämlich aus einer flüssigkeitsdichten Folie und einem Stahl- oder Kunststoffnetz oder einem Kunststoffgewebe, die beide mit der Wanne oder dem unteren Bereich der Pfosten verankert sind.

Starke Regenfälle mit Niederschlagsmengen, die 150 l/m² kurzzeitig überschreiten, führen zu einem starken Anschwellen der Fließgewässer, wodurch bereits kleine Bachläufe zu Strömen werden, die unkontrolliert über die Ufer treten. Seit langem ist auch zu beobachten, dass insbesondere im Frühjahr zur Zeit der Schneeschmelze Flüsse ein Hochwasser führen, das durch vorhandene Deiche oder Ufermauern nicht mehr abgefangen werden kann.

Auen, die bisher als natürliche Wasserstauräume dienten, sind vielfach bebaut worden, was in Verbindung mit Flussbegradigungen das Problem der Hochwassereindämmung weiter verschärft.

Zeiten, in denen eine akute Hochwassergefahr besteht, sind jedoch relativ selten, weshalb stationär vor Ort angeordnete Bauten, insbesondere in Wohnbereichen unerwünscht sind, da sie optisch als störend empfunden werden.

Bereits frühzeitig ist schon vorgeschlagen worden, transportable Hochwasserschutzwände im Bedarfsfall zu errichten und später wieder abzubauen. So wird in der DE 84 01 849 U1 eine transportable Wand vorgeschlagen, die aus mehreren mit Abstand voneinander angeordneten Ständern zur dichtenden Befestigung von in eine Bodenrinne ragenden Wandteilen besteht. Die Ständer sollen durch ein gerades I-Profilstück gebildet und senkrecht in der einen rechteckigen Querschnitt aufweisenden Bodenrinne aufgestellt werden. Die an den Ständern befestigten Wandteile liegen an einer senkrechten Wandung der Bodenrinne an, wobei zwischen den Wandteilen und der anderen senkrechten Wandung der Bodenrinne Spannglieder angeordnet sind.

Auch in der DE 34 48 322 C2 und der DE 34 29 190 C2 sind Hochwasserschutzwände beschrieben, die mittels Pfosten an einen in den Boden eingelassenen Fundament bedarfsweise aufstellbar sind. Die Pfosten werden in gleichmäßigen Abständen in einer dem Fundament zugeordneten Klemmvorrichtung verankert. Zwischen zwei nebeneinander stehenden Posten wird dann ein Schutzwandabschnitt eingesetzt, der allerdings nachteiligerweise große Ausmaße und ein hohes Gewicht hat. Weitere brettähnliche Dämmelemente, die in Pfostennuten von oben eingeschoben werden, sind aus der DE 91 13 405 U1 bekannt. Die DE 195 12 544 C2 beschreibt gebogene Plattenelemente, deren Wölbung helfen soll, diese Elemente mit dem aufkommenden Wasserdruck des Hochwassers dichtend in die Nuten einzupressen. Die Plattenelemente weisen einen oberen und einen unteren Wandabschnitt auf, die dichtend ineinander greifen sollen.

Die in den vorgenannten Dokumenten beschriebenen mobilen Schutzwände habe jedoch den Nachteil, dass jeweilige Wandteile in einer Lagerhalle oder einem anderen Ort, der nicht der Aufstellort für die Wand ist, gelagert und im Bedarfsfall vor Ort gebracht werden müssen, wo sie zu montieren sind. Abgesehen von den sich ergebenden Transportproblemen, welche im Bedarfsfall eine hohe Logistik erfordern und in entsprechender Weise Personal bindet, besteht auch die Gefahr, dass wesentliche Teile, die zum Aufbau der Hochwasserschutzwand erforderlich sind, verloren gehen oder nicht rechtzeitig zur Verfügung stehen. Um hier Abhilfe zu schaffen, ist bereits frühzeitig vorgeschlagen worden, stationäre Einrichtungen zu schaffen, die vor Ort angeordnet sind und sich in eine Platz sparende "Ruheposition" zurückbauen lassen, in der sie auch optisch nicht stören. Hierzu wird in der EP 1 738 050 eine Hochwasserschutzwand vorgeschlagen, die in ortsfest angeordneten Aufnahmen einsetzbare Pfosten besitzt, die in der Ebene der Schutzwand verlaufende Nuten aufweisen und mit zwischen den Pfosten in die Nuten einschiebbaren Plattenelementen versehen werden können, die in einer im Boden versenkten ortsfesten und im Querschnitt U-förmigen Wanne angeordnet sind. Die Pfosten sind ebenfalls in der genannten Wanne horizontal gelagert und in eine vertikale Lage schwenkbar und verriegelbar, wonach die Plattenelemente in die Nuten der Pfosten eingeschoben und so zu einer im wesentlichen dichten Wand verbaut werden. Die Wanne wird zu den Zeiten, zu denen die Hochwasserschutzwand nicht benötigt wird, mit einem befahrbaren und begehbaren Deckel verschlossen. Diese Anordnung hat mehrere entscheidende Vorteile. Zunächst können Transportarbeiten sowie Transportwege eingespart werden, da sich alle für den Aufbau der Hochwasserschutzwand benötigten Teile vor Ort befinden.

Mit wenigen Handgriffen können der Deckel als Abdeckplatte geöffnet, die Plattenelemente entnommen, die Pfosten in eine vertikale Lage geschwenkt, ggf. durch Stützelemente gesichert und abschließend die Plattenelemente eingeführt werden. Der Aufbau einer solchen Hochwasserschutzwand benötigt nicht nur weniger Zeit, sondern spart auch erhebliches Personal.

Im Vorteil dieser Hochwasserschutzwand, auch gegen schweres Treibgut wie Baumstämme oder ähnlichem einen hinreichenden Widerstand entgegensetzen zu können, steht jedoch der Nachteil einer unzureichenden völligen Undichtigkeit gegenüber. Verwendbare Dichtungselemente verlieren mit der Zeit ihre Elastizität und drohen spröde zu werden, was zum Teil zu erwünschten Ausbrüchen führen kann. Darüber hinaus ist auch ein betriebsbedingter Verschleiß beim Auf- und Abbau der Hochwasserschutzwand nicht zu vermeiden.

Vorschläge, anstelle der starren Plattenelemente eine flexible Folie einzusetzen, wie dies beispielsweise in der GB 2 379 948 A beschrieben wird, führen nicht weiter, da die Reißfestigkeit der Folien relativ gering ist, so dass insbesondere scharfkantiges Treibgut die Folie leicht beschädigen kann, wonach ein entstehender Riss sich schnell vergrößert. Aber auch unabhängig von solchen mechanischen Beschädigungen ist aufgrund des hydrostatischen Druckes, dem die Hochwasserschutzfolie ausgesetzt ist, nur eine relativ geringe Bauhöhe möglich. Die Reißfestigkeit kann zwar durch stabilere, dickere Folien erhöht werden, jedoch führt dies zu erheblich höheren Gewichten der Folie, welche die Handhabung erschweren bzw. unmöglich machen. Eine dickere Folie erfordert nachteiligerweise auch einen größeren Stauraum, was die Gesamtkonstruktion nicht unerheblich verteuert.

Neben der Hochwasserproblematik sind Schutzvorrichtungen auch gegen Angriffe auf Personen bekannt, die im öffentlichen Interesse stehen. Beispielsweise ist es bekannt, kugelsichere Glasscheiben aufzustellen, so dass die dahin befindlichen Personen vor Zugriffen geschützt sind. Nachteilig an bekannten kugelsicheren Schutzvorrichtungen ist, dass die kugelsicheren Scheiben relativ massiv sind und mit einem hohen Arbeitsaufwand transportiert und aufgestellt werden müssen, wenn eine solche Schutzvorrichtung lediglich für einen kurzen Zeitraum benötigt wird. Die Nachteile solcher Schutzvorrichtungen ergeben sich demzufolge analog zu der Problematik von reinen Hochwasserschutzwänden.

Eine weitere Hochwasserschutzwand ist aus DE 10 2007 040 744 bekannt. Hierin wird ein Hochwasserschutzsystem mit temporär aufbaubarer Stauwand offenbart. Als Stauwand ist eine Membran vorgesehen, die sich zwischen einerseits bodenseitig und andererseits bodenfern gehalterten bzw. abgestützten Membranrändern im Wesentlichen abstützungsfrei erstreckt.

GB 2 450 875, DE 10 2008 036 752, GB 2 397 086 und EP 0 586 364 A1 beziehen sich auf Hochwasserschutzwände mit Schwimmkörpern, die eine zumindest bewegliche Schutzwand durch die Auftriebskräfte des Schwimmkörpers hochzieht.

WO 02/44502 A1 bezieht sich auf eine Hochwasserschutzwand bestehend aus einer Folie, die an einer Hauswand befestigt wird.

Es ist daher Aufgabe der vorliegenden Erfindung, eine Schutzvorrichtung zu schaffen, die stationär vor Ort gelagert und in kürzester Zeit mit wenig Personal aufgerichtet werden kann.

Zur Lösung dieser Aufgabe wird die Schutzvorrichtung nach Anspruch 1 vorgeschlagen.

Erfindungsgemäß ist bei einer errichteten Hochwasserschutzwand außenseitig die Kunststofffolie und binnenseitig das Stahl- oder Kunststoffnetz oder das Kunststoffgewebe angeordnet, so dass die Folie die Dichtigkeit der Hochwasserschutzwand liefert und die Stabilität durch das Stahl- oder Kunststoffnetz oder das Kunststoffgewebe gewährleistet wird.

Eine solche Hochwasserschutzwand lässt sich äußerst einfach, schnell mit wenig Personalaufwand aufstellen, indem eine Abdeckung der Wanne hochklappt, das Wandelement entnommen wird und die Wandelemente an einer geeigneten Position, wie beispielsweise einem Pfosten oder einem Hausdach fixiert wird. Auf diese Weise lässt sich die gewünschte Hochwasserschutzwand schnell und einfach aufstellen.

Weiterbildungen der Erfindung sind in den Unteransprüchen beschrieben. Erfindungsgemäss besitzt die Hochwasserschutzwand Wandelemente, die aus einer flüssigkeitsdichten Folie und einem Stahl- oder Kunststoffnetz oder Kunststoffgewebe bestehen, die beide im unteren Bereich mit der Wanne oder gegebenenfalls dem Pfosten verankert sind. Diese Ausführungsform besitzt den Vorteil, zum einen die notwendige hinreichende Festigkeit zum Standhalten gegen den hydrostatischen Druck sowie durch Treibgut geführte Stöße zu liefern und zudem völlig flüssigkeitsdicht zu sein. Entscheidend ist bei dieser Konstruktion, dass die Folie sowie das Stahl- oder Kunststoffnetz bzw. Kunststoffgewebe im unteren Bereich, d. h. im Bereich der Wanne oder der Pfostenfüße verankert sind, so dass dort keine Flüssigkeit eindringen kann. Die Folie liefert die Dichtigkeit der Hochwasserschutzwand, wohingegen die Stabilität durch das Stahl- oder Kunststoffnetz oder -gewebe gewährleistet wird. Anders als bei plattenförmigen Wandelementen kann die Folie und ggf. auch das Stahl- oder Kunststoffnetz oder -gewebe eine Breite besitzen, die mehrere Pfostenabstandslängen überschreitet. Das mögliche Breitenmaß kann grundsätzlich beliebig gewählt werden, wobei lediglich beim Hochziehen der Folie und dem Stahl- oder Kunststoffnetz oder - gewebe mit wachsender Breite entsprechende Hubeinrichtungen wie Winden oder ähnliches eingesetzt werden können. Die Hochwasserschutzwand lässt sich schnell und mit wenigen Arbeitsschritten aufbauen. Zunächst wird die Abdeckung der Wanne hochgeklappt, um die in der Wanne gelagerten Teile freizugänglich zu machen. Hiernach wird die Folie, die wasserdicht an der Seitenwandung der Wanne befestigt ist, herausgezogen, ggf. herausgerollt. Soweit das Stahl- oder Kunststoffnetz oder - gewebe nicht gemeinsam, weil mit der Folie verbunden, herausgezogen wird, wird zunächst die Folie und anschließend das Netz oder Gewebe herausgezogen bzw. herausgerollt. Die in der Wanne freiliegenden oder freigelegten Stützpfosten werden in die senkrechte Position gebracht, was ggf. unter Unterstützung durch Federn erleichtert werden kann. Danach kann der Pfosten in der Lotrechten in eine Klammer einrasten und wird mit Seilen abgespannt oder mit Stangen seitlich abgestützt. Anschließend werden bei hohen Hochwasserschutzwänden vorhandene rückseitige Abstützungen an den Pfosten befestigt. An den nunmehr stabilisierten Pfosten wird das Netz, ggf. gemeinsam mit der Folie oder es werden nacheinander zunächst das Netz und dann die Folie hochgezogen, wonach das Netz und die Folie am oberen Pfostenrand befestigt werden. Soweit erforderlich, werden noch zusätzliche Spannmittel an der Folie bzw. an der Folie und dem Netz sowie an den Pfosten verspannt, um ein "Durchhängen" der Folie zu verhindern.

Die notwendigen Werkzeuge und Arbeitsmittel beschränken sich auf wenige Teile, nämlich eine Einrichtung zum Hochziehen der Folie und des Stahl- oder Kunststoffnetzes, etwaige Schraubenschlüssel zur Befestigung der Schrauben und Bolzen sowie notwendige Haken.

Versuche haben ergeben, dass die auch beispielsweise für LKW-Planen verwendeten PVC-Folien oder eine andere hochfeste Folie optimale Eigenschaften besitzen. Das Gewicht der verwendeten Folien soll vorzugsweise mindestens 500 g/m² betragen. Die PVC-Folie stellt einen optimalen Kompromiss dar, der zum einen das Gewicht der Folie minimiert, zum anderen jedoch eine hinreichende Zerreißfestigkeit der Folie liefert.

Nach einer weiteren Ausgestaltung der Erfindung wird ein Stahlnetz als Drahtgitter oder ein Kunststoffnetz aus kreuzweise verbundenen gewebten Strängen verwendet. Der Vorteil eines Drahtnetzes liegt erkennbar in der höheren Stabilität und Sabotagesicherheit. Demgegenüber sind gewebte Kunststoffnetze preiswerter und im Regelfall erheblich leichter und auch flexibler, was für die Unterbringung des Netzes in der vorhandenen Wanne von Bedeutung ist. Bekannt Gittergewebe bestehen aus geradlinig verlaufenden Kettfäden und im Wesentlichen rechtwinklig dazu verlaufenden Schussfäden, die mit den Kettfäden ggf. über Fixierungsfäden verbunden sind. Solche Kunststoffgitter sind im Prinzip nach dem Stand der Technik bekannt und werden beispielsweise in der DE 299 24 152 U1 beschrieben.

Vorzugsweise werden zur Schaffung einer raumsparenden Anordnung in der Wanne das Stahlnetz und das Kunststoffnetz als Rolle oder als Zick-Zack-Lage aufgenommen. Wie bereits erwähnt, sind vorzugsweise die Pfosten ebenfalls in der Wanne lagerbar, wie dies in der EP 1 738 050 B1 beschrieben wird.

Die vorliegende Erfindung erstreckt sich jedoch auch auf solche Ausführungsformen, bei denen aus Platzgründen die Wanne lediglich zur Lagerung der Folie und des Stahl- oder Kunststoffnetzes ausgebildet ist. In diesem Fall werden die Pfosten in vorbereitete betonierte Aufnahmen in der Wanne eingesteckt oder verschraubt und anschließend das Netz mit Folie hochgezogen und wie beschrieben befestigt. Solche Ausführungen haben den Vorteil, dass die Wanne weniger voluminös ausgebildet werden muss und dass Schwenkvorrichtungen für die Pfosten vermieden werden. Die Pfosten werden lediglich in entsprechende im Boden bzw. in der Wanne verankerte Hülsen gesteckt oder an Platten verschraubt. Wesentlich ist hierbei, dass der Befestigungsort der Folie und des Netzes in der Wanne pfostennah gewählt wird, damit Ausbauchungen der Folie, die dann erheblichen hydrostatischen Drucken ausgesetzt werden, vermieden werden.

Insbesondere bei geringeren geforderten Hochwasserschutzwand-Bauhöhen kann vorteilhafterweise der Deckel für die Wanne als schwenkbarer Pfosten ausgebildet sein, an dem die Folie und das Stahl- oder Kunststoffnetz befestigt werden.

Nach einer alternativen Ausführungsform wird der Deckel als Auflage oder Abstützung für die Folie und das Stahl- oder Kunststoffnetz im unteren Bereich verwendet, vorzugsweise in einer Winkelstellung zwischen 30° und 60° gegen eine Horizontallinie. In diesem Fall nimmt der Deckel den hydrostatischen Druck im unteren Bereich auf, was das Netz und den Pfosten zusätzlich entlastet.

Zur unteren Befestigung der Folie und des Stahl- oder Kunststoffnetzes ist entweder ein Keder oder eine Klemmleiste vorgesehen. Die Befestigungen befinden sich vorzugsweise an einer Seitenwand der U-förmigen Wanne und sind flüssigkeitsdicht ausgebildet.

An der oberen Befestigung der Folie und/oder des Netzes sind vorzugsweise Seile oder Stahldrähte eingeführt, bilden einen hohen Schutz gegen Treibgut und können in den Pfostenkopf gehängt werden oder es können Schlaufen für die Aufhängung befestigt werden. Zur Verstärkung des Netzes können auch weitere Seile in das Netz eingeführt werden.

Wie bereits erwähnt, kann zur Vermeidung eines Durchhängens der Folie und des Stahl- oder Kunststoffnetzes im oberen Bereich eine Schlinge oder ein Schlaufengurt vorgesehen sein, an dem die Folie und das Kunststoffnetz jeweils mit dem Kopfbereich der Pfosten befestigt wird.

Nach einer weiteren bevorzugten Ausführungsform der vorliegenden Erfindung ist vorgesehen, dass das Stahl- oder Kunststoffnetz die Oberkante der Folie überragt und im Abstand hierzu am Pfosten, einer Hauswand, einem Hausdach oder einem anderen Fixierungspunkt befestigbar ist. Hierdurch kann zwar die maximale Wasserhöhe nicht erhöht werden, allerdings wird der geschützte Bereich vor Treibgut und vor vom Wind mitgerissenen Gegenständen geschützt, die an dem Netz hängen bleiben. Darüber hinaus ist zur gelegentlichen Erhöhung der maximalen Wasserhöhe, wie sie beispielsweise bei besonders hohen Überschwemmungen auftreten kann, vorgesehen, dass im Pfosten eine längsaxial bewegliche Verlängerung angeordnet ist, die aus dem Pfosten bis zu einem Anschlagpunkt herausgezogen werden kann und in einer Einrastposition ruht, so dass zu Erhöhung der maximalen Wasserhöhe das Wandelement an der Verlängerung befestigt wird. Die Verlängerungen sind in unterschiedlichen Längen vorgesehen und prinzipiell nicht beschränkt. Hierdurch kann eine deutliche Erhöhung der maximalen Wasserhöhe erreicht werden. Wie die übrigen Elemente der Hochwasserschutzwand auch, ist die Verlängerung nicht als loses Teil vorgesehen, und weist vorzugsweise eine Nut auf, in die im fixierten Zustand ein Bolzen greift, der mit dem Pfosten verbunden ist. Hierzu lagert die Verlängerung beispielsweise in einer Ausnehmung an der Frontseite des Pfostens, so dass die Verlängerung in der Ausnehmung hineingedreht werden kann. Durch geeignete Dimensionierung der in der Verlängerung eingebrachten Nut und dem Bolzen im Pfosten kann die Verlängerung durch eine Drehbewegung einrasten. Die beschriebene Fixierungsmöglichkeit kann durch alternative Ausführungen ersetzt werden.

Weitere Vorteile sowie Ausgestaltungen der vorliegenden Erfindung werden im Folgenden anhand der Zeichnungen beschrieben. Es zeigen:
- Fig. 1 bis 6: je einen Querschnitt einer Hochwasserschutzwand, im ein- oder aufgebauten Zustand,
- Fig. 7: eine prinzipielle Ansicht einer Pfostenabstützung,
- Fig. 8: einen Querschnitt einer Schutzvorrichtung im aufgebauten Zustand, wobei die Folie und das Netz an einer Hauswand befestigt sind,
- Fig. 9 bis 11: je einen Querschnitt einer Schutzvorrichtung, der nicht vom Wortlaut des Anspruchs 1 gedeckt ist, im ein- oder aufgebauten Zustand, bestehend aus mindestens einem befüllbaren Schlauch,
- Fig. 12 bis 16: je eine Detailansicht einer Befestigung einer Folie und eines Stahloder Kunststoffnetzes bzw. eines Gewebes,
- Fig. 17 bis 19: je eine konkrete Ausführungsform einer Aufnahme an einem Pfostenkopf,
- Fig. 20 bis 23: je eine Ausführungsform eines oberen Wandabschlusses,
- Fig. 24: einen Querschnitt einer Wanne mit einem Anker im Boden und
- Fig. 25: einen Querschnitt einer Wanne mit einem Pumpschacht und einem Ablauf.
- Fig. 26a-c: weitere Querschnittsdarstellungen einer Schutzvorrichtung.
- Fig. 27a, b: je eine Detailansicht eines Pfostenkopfes mit einer Verlängerung und
- Fig. 28: eine weitere Ausführungsform einer Hochwasserschutzwand in Querschnittsdarstellung.

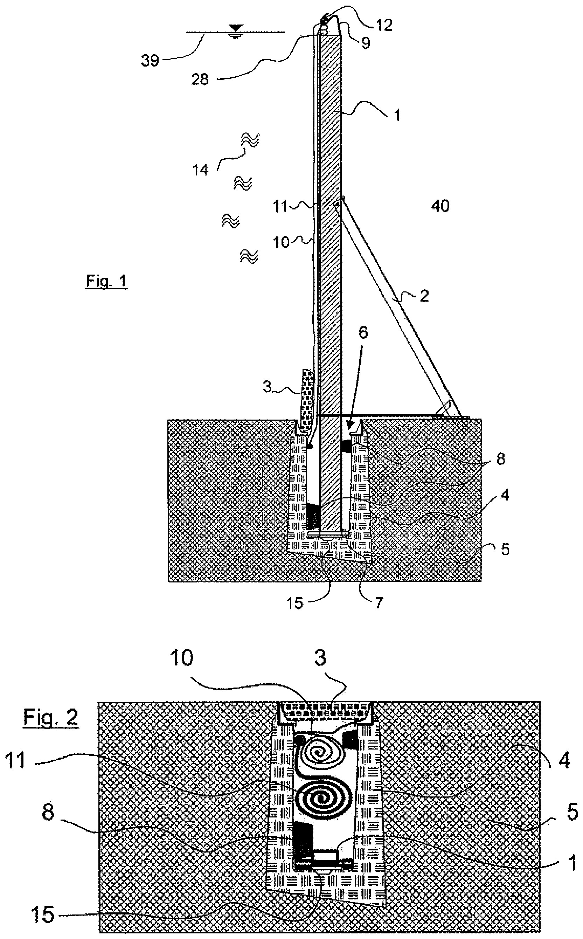

Die in den Fig. 1 bis 7 dargestellten Hochwasserschutzwände besitzen jeweils Pfosten 1, die an einem Gelenk 7 schwenkbar in einer Wanne 4 gelagert sind, die Wanne 4 ist dabei im Boden 5 eingelassen und von einem ebenfalls schwenkbar gehaltenem Deckel 3 verschließbar, für den oberhalb der Wanne 4 eine Deckelaufnahme 6 vorgesehen ist. Damit sich in der Wanne 4 kein Regenwasser sammelt, ist an der Unterseite der Wanne eine Entwässerung 15 vorgesehen. Neben dem Pfosten 1 ist in der Wanne 4 zudem die Folie 10 sowie ein Netz 11 gelagert, das ein Stahl- oder Kunststoffnetz oder ein Kunststoffgewebe sein kann. Der Pfosten 1 rastet in der Lotrechten in einer Klammer 47 ein und wird durch eine Abspannung 46 an einem seitlichen Umfallen gehindert und somit gesichert.

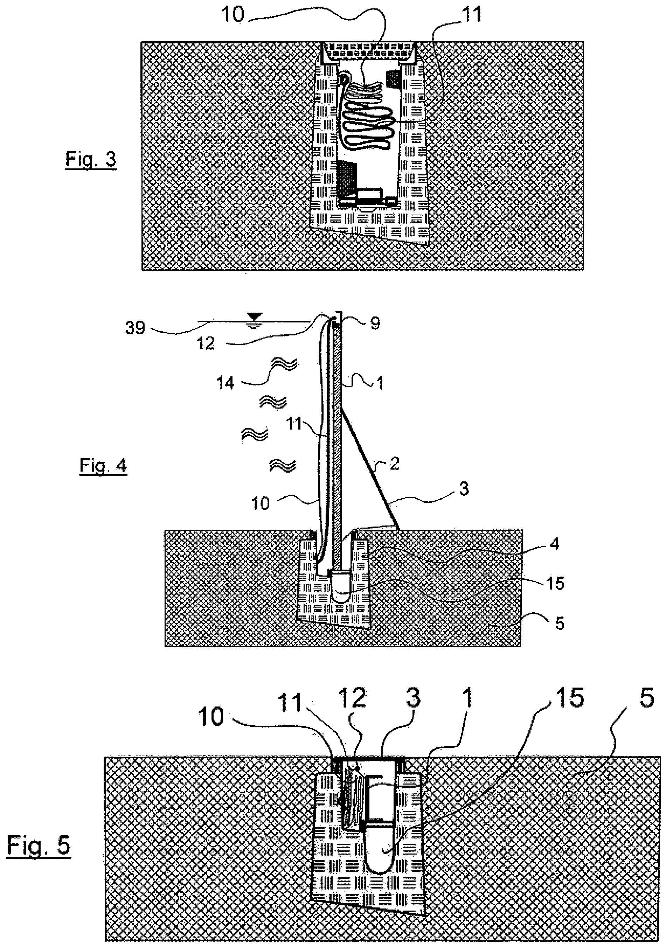

Um die Hochwasserschutzwand zu errichten, sind im Wesentlichen die folgenden Arbeitsschritte durchzuführen. Zunächst wird der Deckel 3 aufgeklappt, so dass der waagerecht gelagerte Pfosten 1 in eine lotrechte
Position gebracht werden kann und dort in die Klammer 47 einrastet und über Seile oder Flachstäbe seitlich abgespannt wird. Hierbei wird er innerhalb der Wanne 4 nach vorne und hinten durch Dämpfer-Keilkissen 8 gehalten und gestützt. Oberhalb des Bodens 5 ist zusätzlich eine Abstützung 2 vorgesehen, um der Konstruktion weitere Stabilität zu verleihen. Sobald die erforderliche Anzahl der Pfosten aufgestellt ist, kann die Folie 10 und das Netz 11 montiert werden. Diese sind entweder als Rolle (Fig. 2) oder zick-zack-förmig (Fig. 3) zusammengelegt, innerhalb der Wanne 4 gelagert und werden vor der Montage entsprechend abgerollt oder auseinandergefaltet. Die Folie 10 und das Netz 11 sind am Rand der Wanne 4 so fixiert, dass dort später kein Wasser durchdringen kann. Anschließend wird zunächst das Netz 11 und anschließend die Folie 10 am Pfostenkopf 9 befestigt. Um die Stabilität der Hochwasserschutzwand weiter zu erhöhen, werden die Pfostenköpfe 9 mit Pfostenseilen 28 verbunden, wobei sowohl die Folie 10 als auch das Netz 11 in dem Pfostenkopf 9 und die Pfostenseile 28 zwischen die Pfostenköpfe 9 verbunden werden.

Die beschriebene Hochwasserschutzwand ist derart konstruiert, dass sie das in Fig. 1 linksseitig angeordnete Wasser 14 bis zu einer maximalen Wasserhöhe 39 abschotten kann und den in Fig. 1 rechtsseitig dargestellten Bereich 40 vor eindringendem Wasser 14 wirksam schützt.

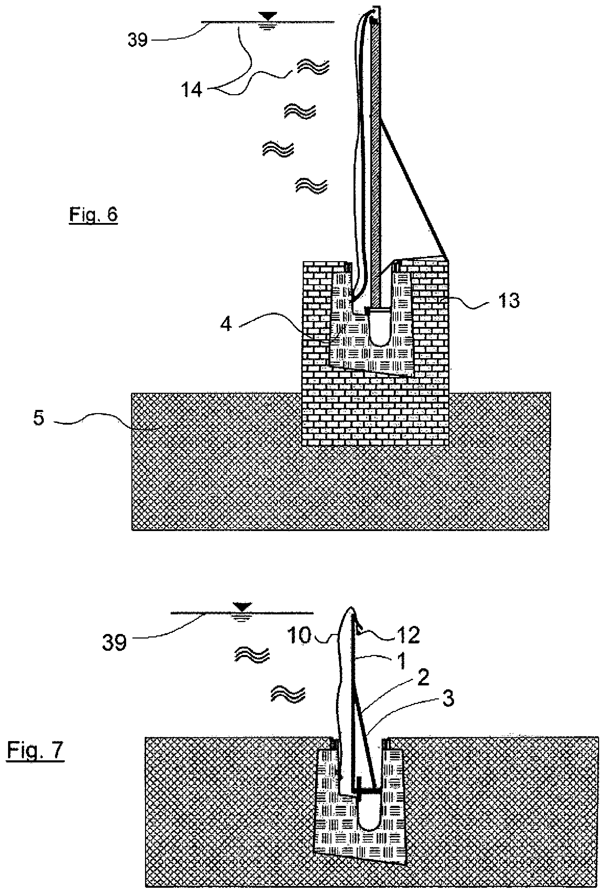

Die Fig. 4 und 7 zeigt eine Ausführungsform, bei der der Deckel 3 gleichzeitig als Abstützung 2 eingesetzt wird. Hierdurch wird ein erheblicher Platzbedarf innerhalb der Wanne 4 eingespart.

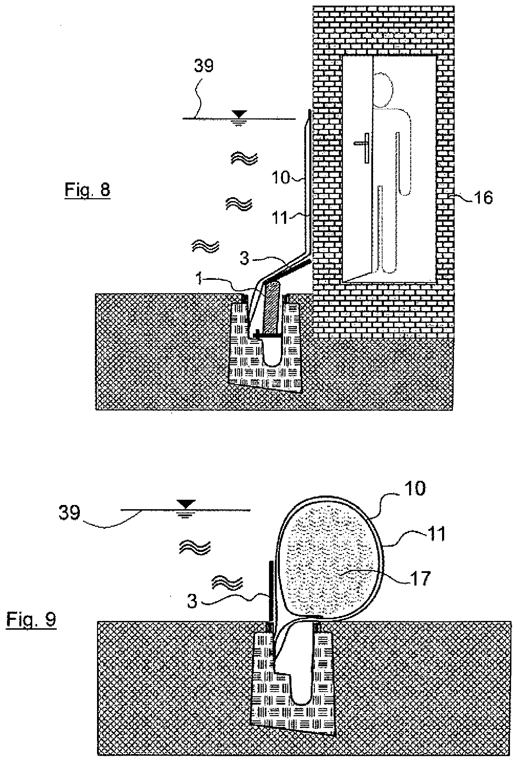

In Fig. 6 ist ein weiteres konkretes Ausführungsbeispiel dargestellt, wobei die Wanne 4 dort innerhalb einer Mauer 13 angeordnet ist. In Fig. 7 wird dargestellt, dass der Deckel 3 sowohl als Pfosten 1 als auch als Abstützung 2 verwendet werden kann. Ein weiteres konkretes Ausführungsbeispiel der vorliegenden Erfindung ist in Fig. 8 gezeigt, wo die Folie 10 und das Netz 11 an einer Hauswand 16 befestigt sind, so dass bei der Konstruktion nur ein vergleichsweise kleiner Pfosten 1 eingesetzt wird, der zusammen mit dem Deckel 3 lediglich die Funktion eines Zuweisers für die Folie 10 und das Netz 11 übernimmt. Hierdurch wird vermieden, dass das Netz 11 bzw. die Folie 10 an scharfe Kanten gedrückt wird oder durchhängt, was das Netz 11 oder die Folie 10 beschädigen könnte. Allerdings kann bei dieser Ausgestaltung auch auf die Anordnung eines Pfostens 1 verzichtet werden, wozu die Folie 10 und das Netz 11 relativ dicht an der Hauswand 16 fixiert sind.

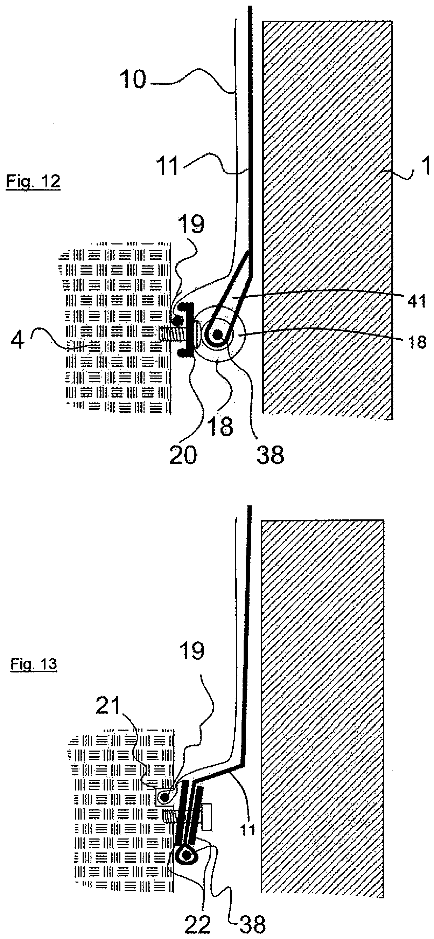

Die Dichtigkeit und Stabilität der Hochwasserschutzwand hängt unter anderem von der Fixierung der Folie 10 und des Netzes 11 innerhalb der Wanne 4 ab. Hierzu sind verschiedene vorteilhafte Ausführungsformen vorgesehen, die in den Fig. 12 bis 16 schematisch gezeigt sind. Nach einer ersten konkreten Ausgestaltung ist vorgesehen, dass in die Unterkante der Folie 10 ein Keder 19 eingearbeitet ist, der von einem U-Profil 20 umgriffen wird und mittels einer Ringschraube 18 an die Wandung der Wanne 4 gedrückt bzw. gepresst wird. An den Ringen der Ringschrauben 18 wird das Netz 11 befestigt, das an seiner Unterkante mehrere Laschen 41 aufweist, die längsaxial von einem unteren Fixierungsseil 38 durchgriffen werden.

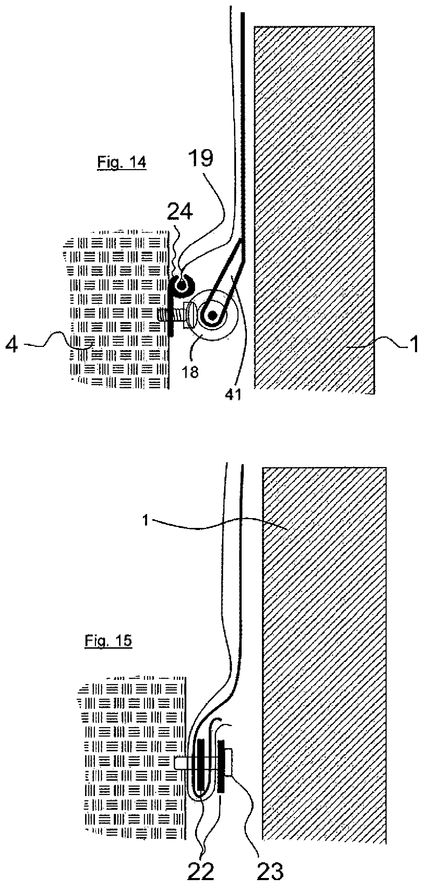

Alternativ hierzu kann der Keder 19 auch in eine entsprechend ausgebildete Kerbe 21 gelegt werden, die anschließend von einem Flach-Profil 22 abgedeckt und mittels einer Schraube fixiert wird (Fig. 13). Dabei wird das Netz 11, das in dem dargestellten Ausführungsbeispiel ebenfalls einen Keder oder ein unteres Fixierungsseil 38 besitzt, von einem weiteren Flachprofil 22 gehalten, das von der gleichen Schraube durchgriffen wird. Schließlich kann nach dem gleichen Prinzip auch eine Kederleiste 24 angeordnet sein, die den Keder 19 im eingebauten Zustand teilweise umgreift und somit die Folie 10 festhält (Fig. 14).

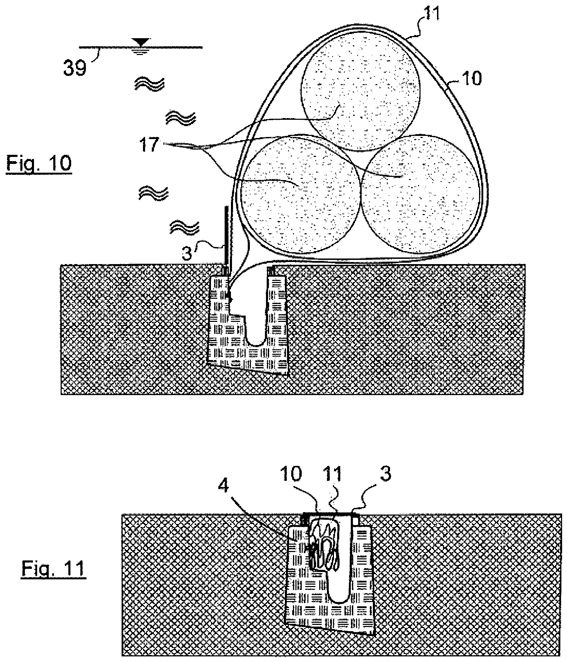

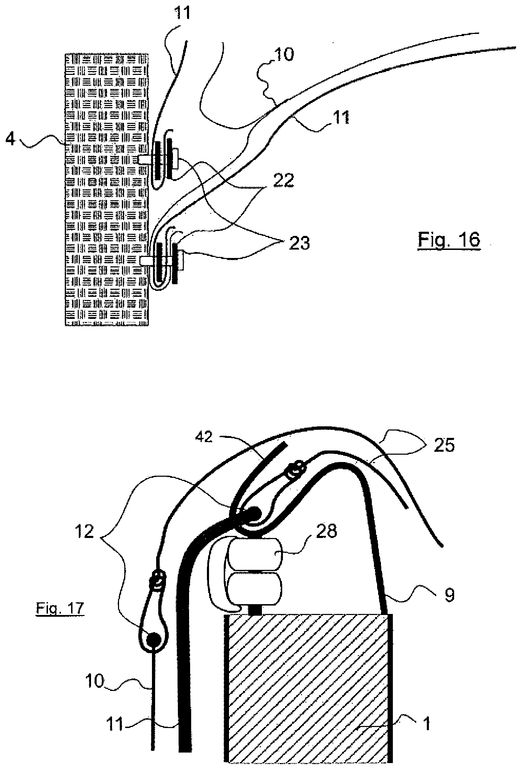

Nach einer weiteren alternativen Ausgestaltung kann die Folie 10 und das Netz 11 auch zwischen zwei Flach-Profilen 22 eingeklemmt werden, wozu die Folie 10 und das Netz 11 um die Flach-Profile 22 gelegt werden, die anschließend mit einer Schraube 23 an die Wandung der Wanne 4 geschraubt werden (Fig. 15, 16). Fig. 16 zeigt die konstruktionsgleiche Ausführungsform für den Fall, dass die Wandelemente nach den in Fig. 9 bis 11 gezeigten Konstruktionsprinzip aufgebaut sind, wobei beide Seiten des Netzes 11 in der Wanne 4 fixiert werden.

Bei allen Ausführungsformen erstrecken sich die Befestigungsleisten entlang der gesamten Wannenlänge, so dass eine optimale Abdichtung gewährleistet ist.

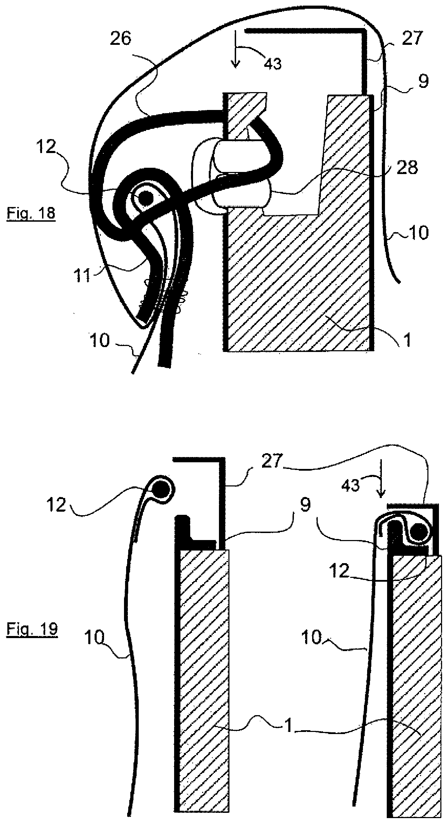

Auch für die Oberkante der Folie 10 und des Netzes 11 sind verschiedene Befestigungsmöglichkeiten an dem Pfostenkopf 9 vorgesehen, die schematisch in den Fig. 17 bis 19 dargestellt sind. Dabei sind sowohl an dem Netz 11 als auch an der Folie 10 obere Fixierungsseile 12 angeordnet, die längsaxial Schlaufen 26 durchgreifen. Diese oberen Fixierungsseile 12 können beispielsweise mittels eines Seils 25 zum Hochziehen in entsprechend ausgebildeten Ausnehmungen am Pfostenkopf 9 eingeführt und dort befestigt werden. Fig. 17 zeigt eine Ausführungsform, bei der das obere Fixierungsseil 12 an einem Haken 42 fixiert ist. Demgegenüber ist in den Fig. 18 und 19 eine Ausführungsform mit einer Falle 27 dargestellt, wobei hierzu am Pfostenkopf 9 eine Nut vorgesehen ist, in die das obere Fixierungssei! 12 unmittelbar (Fig. 19) oder mittelbar (Fig. 18) über eine Schlaufe 26 eingelegt ist. In beiden Fällen wird die Nut durch die Falle 27 geschlossen, die hierzu in Pfeilrichtung 43 bewegt wird. Bei den Ausführungsbeispielen nach Fig. 18 ist zudem vorgesehen, dass die Folie 10 einen Endabschnitt besitzt, der nach dem Aufstellen über die Pfosten gelegt und auf der dem Hochwasser abgewandten Seite mit einer (nicht dargestellten) Befestigung gehalten wird. Hierdurch wird die maximale Hochwasserhöhe 39 unabhängig von der Fixierung der Folie 10 sowie des Netzes 11 um ein entsprechendes Stück erhöht.

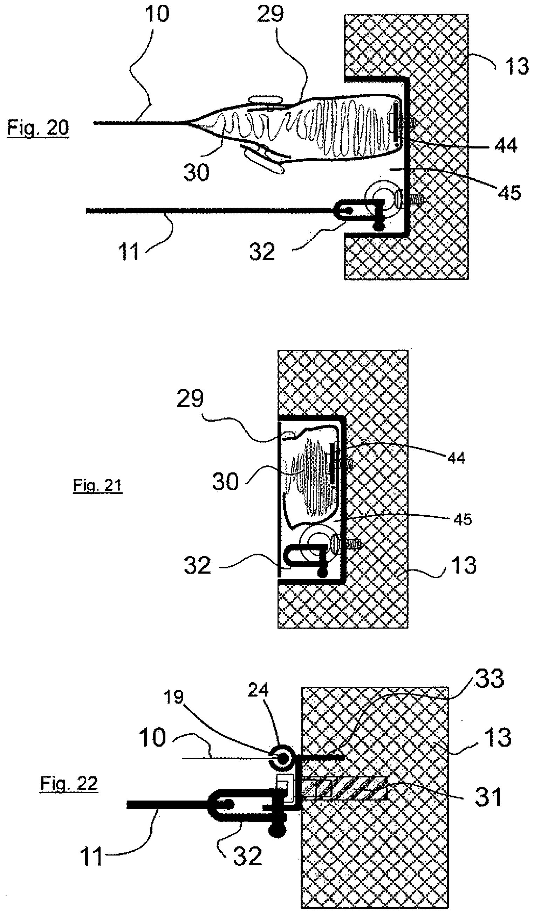

Um einen optimalen Hochwasserschutz zu ermöglichen, müssen die äußeren Wandelemente einer Hochwasserschutzwand an den Seiten dicht und stabil fixiert sein, wozu die in den Fig. 20 bis 23 gezeigten Möglichkeiten vorgesehen sind. Innerhalb einer senkrecht angeordneten Nut 45 in einer Mauer 13 ist mindestens eine Ringschraube fixiert, an dessen Ring ein Schäkel 32 befestigt ist. Hiermit wird das Netz 11 fixiert. Demgegenüber ist zur Befestigung der Folie 10 eine Tasche 29 vorgesehen, innerhalb der eine dünne und dichte Membran 30 gelagert ist. Im Zusammengebauten Zustand (Fig. 21) ist die Tasche 25 offen innerhalb der Nut 45 angeordnet, wobei zum Aufbauen des entsprechenden Wandelementes die Folie 10 mit den Enden der Tasche 29 verbunden wird. Die Tasche 29 wird mittels eines FlachProfils 44 an der Mauer 13 befestigt, so dass eine dichte und stabile Verbindung besteht. Alternativ hierzu kann die Folie 10 auch mit einem Keder 19 in einer Kederleiste 24 fixiert werden (Fig. 22), die an einem Winkel-Profil 33 befestigt ist, das seinerseits mit einem Dübel 31 mit der Mauer 13 verbunden ist.

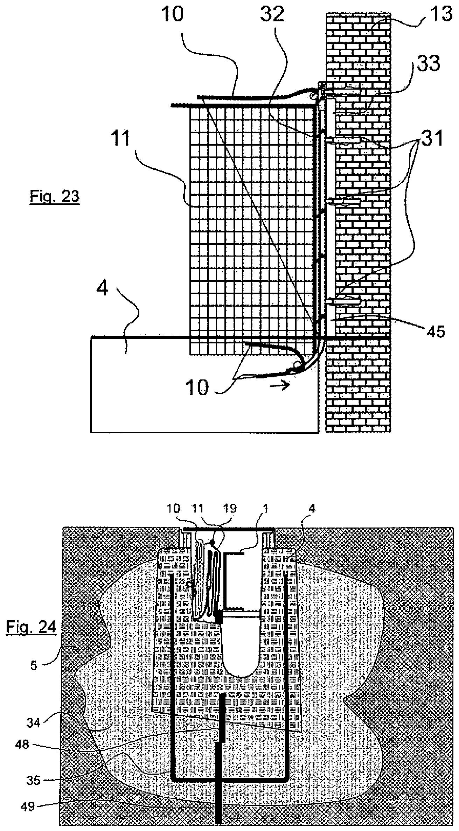

Fig. 23 zeigt diese Ausgestaltung in einer Draufsicht, von der dem Hochwasser abgewandten Seite. Zum Aufbauen der Folie 10 wird deren Keder am unteren Ende in die Kederleiste 24 eingeführt und bis zum oberen Ende der Vorrichtung geschoben. In der oberen Hälfte der Fig. 23 ist die Folie 10 im bereits zusammengebauten Zustand gezeigt.

Damit die gesamte Konstruktion dem immensen Wasserdruck standhält, muss die Wanne 4 hinreichend stabil im Boden 5 gelagert sein. Hierzu wird die Wanne 4 zunächst von einer Befestigungsmasse 34 umgeben, die beispielsweise aus Beton oder aus einem anderen aushärtbaren Material besteht. Zudem ist ein Anker 35 aus Eisen oder Stahl vorgesehen, der sowohl die Wanne 4 als auch die Befestigungsmasse 34 durchgreift. Um die Konstruktion auf einer Spundwand 49 zu befestigen können auch Anker für die Spundwand 48 in die Wanne 4 eingearbeitet werden.

In der Praxis ist es ungünstigerweise nicht zu vermeiden, dass Regen- oder Dränagewasser in die Wanne 4 läuft. Um hier Abhilfe zu schaffen, sind daher innerhalb der Wanne 4 mindestens ein Pumpenschacht 36 sowie Rohre 37 vorgesehen, so dass die vergleichsweise geringe Menge an Dränage- oder Regenwasser abgepumpt werden kann. Der Wannenablauf zum Kanalnetz in dem Pumpenschacht wird mittels einer Verschlusseinrichtung (nicht dargestellt) verschlossen.

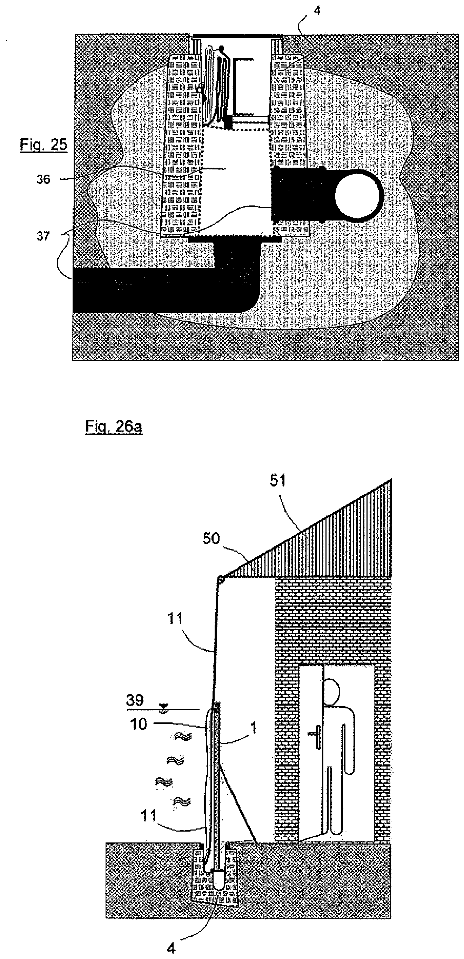

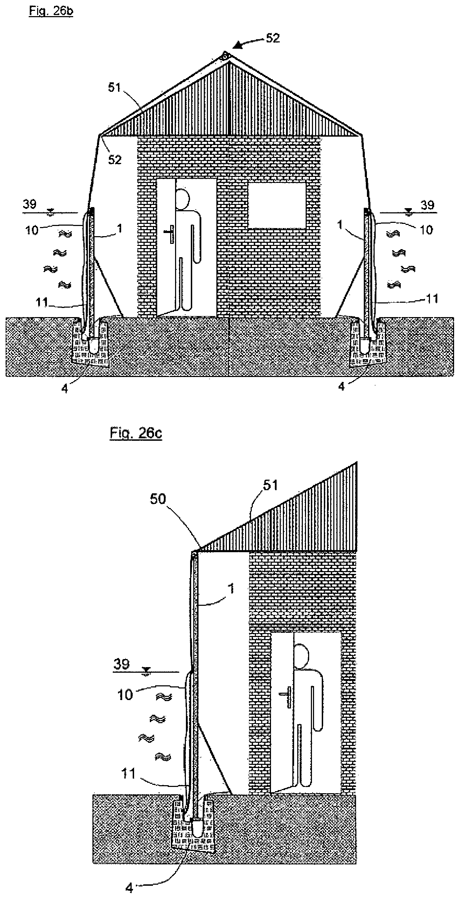

Eine Schutzvorrichtung wird in den Fig. 26a bis c gezeigt, die insbesondere bei Unwetterlagen eingesetzt wird, wo Hochwasser und Sturm zusammenfallen, wie es beispielsweise in hurrikan-gefährdeten Gebieten oftmals vorkommt. Bei der dargestellten Ausführungsform wird das Stahl- oder Kunststoffnetz 11 über die Oberkante der Folie 10 geführt und im Abstand hierzu fixiert. Die Fig. 26a und c zeigen eine Ausführungsform, bei der das Netz 11 an der Traufe 50 eines Daches 51 befestigt ist. Alternativ hierzu kann das Netz auch an einem Dachbalken oder einer Verankerungseinheit am Gebäude (nicht dargestellt) fixiert werden. Hierdurch ist der Zwischenraum zwischen dem Ende des Pfostens 1 bzw. der Folie 10 und dem Anfang des Daches 51 gegen herumfliegende Teile geschützt. Darüber hinaus ist das Dach 51 auch zusätzlich fixiert und - zumindest bis zu einem bestimmten Grad - von der Zerstörung durch Sturm geschützt.

Alternativ zu der Fixierung des Netzes 11 an der Traufe 50 oder dem Dachbalken eines Daches 51, kann das Netz 11 auch über das Dach 51 herübergeführt werden und mit dem Netz 11 von der anderen Seite verbunden werden (Pfeil 52).

Fig. 26c zeigt eine Ausgestaltung, bei der ein besonders langer Pfosten eingesetzt wird, der bis zur Traufe 50 des Daches 51 reicht und das Dach 51 zusätzlich abstützt, um eine Beschädigung der Traufe 50 oder des Mauerwerks zu verhindern, da bei einer Zugbelastung auf das Stahl- oder Kunststoffnetz 11 recht hohe Kräfte auf die Traufe 50 ausgeübt werden können.

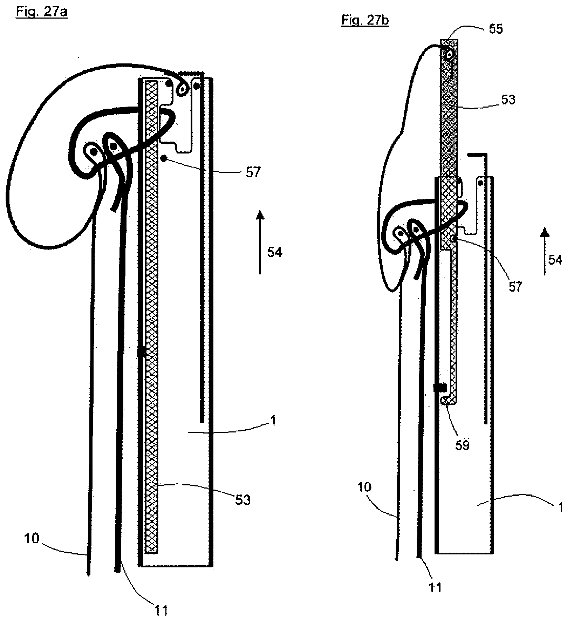

Es wurde bereits in der Beschreibung erwähnt, dass in manchen hochwassergefährdeten Gebieten regelmäßig besonders hohe Hochwasser vorkommen, so dass die üblicherweise von der Höhe hinreichenden Pfosten das Hochwasser nicht vollständig abschirmen können. Für solche überraschend hohen Hochwasserlagen ist nach einer weiteren konkreten Ausführungsform vorgesehen, an der Stirnseite der Pfosten 1 Verlängerungen 53 vorgesehen, die aus den Pfosten 1 herausgezogen werden können. Die Fig. 27a und b zeigen je eine konkrete Ausführungsform einer solchen Verlängerung 53. Im eingebauten Zustand (siehe Fig. 27b) ruht die Verlängerung 53 im oberen Abschnitt des Pfostens 1. Im Bedarfsfall kann die Verlängerung in Pfeilrichtung 54 aus dem Pfosten 1 herausgezogen werden und durch eine Drehbewegung fixiert werden, wie es in Fig. 27a dargestellt ist. Hiernach kann ein überschüssiges Stück der Folie 10 mit einer Klemmleiste 55 am oberen Ende der Verlängerung 53 befestigt werden. Die Verlängerung 53 besitzt einen unteren Anschlag 59, so dass die Verlängerung 53 nicht ungewollt dem Pfosten 1 entnommen werden und als loses Teil verloren gehen kann. Darüber hinaus ist zur Fixierung der Verlängerung 53 eine Nut 56 angeordnet, in der im zusammengebauten Zustand ein Bolzen 57 greift, der mit dem Pfosten 1 fixiert ist. Hierdurch wird verhindert, dass die Verlängerung 53 zurück in den Pfosten 1 rutscht.

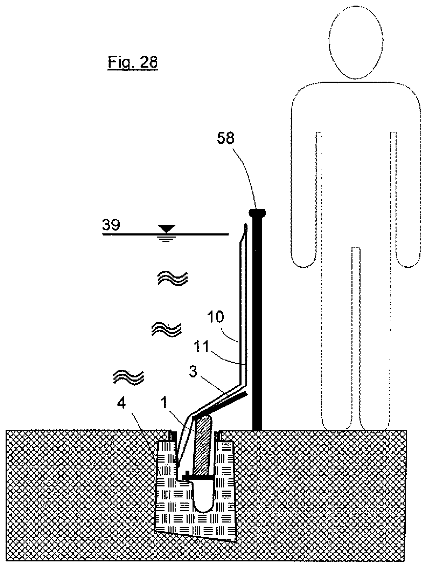

Ein letztes Ausführungsbeispiel der Erfindung ist in Fig. 28 dargestellt, bei der als Pfosten 1 ein Geländer 58 oder ein Zaun verwendet wird, das oder der ohnehin an der entsprechenden Stelle angeordnet ist. Solche Geländer 58 oder Zäune sind oftmals an Promenaden oder ähnlichen Gehwegen befestigt, die sich in Ufernähe befinden. Insbesondere bei kleinen Hochwässern, die den entsprechenden Gehweg maximal hüfthoch überfluten würden, ist eine solche Hochwasserschutzwand schnell und unkompliziert aufgebaut. Die Fixierung der Wandelemente an dem Geländerpfosten kann analog zu dem oben beschriebenen Ausführungsbeispiel durchgeführt werden. Selbstverständlich sind auch andere Befestigungsmöglichkeiten im Rahmen der vorliegenden Erfindung möglich.

### Bezugszeichenliste

- 1.: Pfosten
- 2.: Abstützung
- 3.: Deckel
- 4.: Wanne
- 5.: Boden
- 6.: Deckelaufnahme
- 7.: Gelenk
- 8.: Dämpfer- Keilkissen
- 9.: Pfostenkopf
- 10.: Folie
- 11.: Netz
- 12.: oberes Fixierungsseil
- 13.: Mauer
- 14.: Wasser
- 15.: Entwässerung
- 16.: Hauswand
- 17.: Schlauch
- 18.: Ringschraube
- 19.: Keder
- 20.: U-Profil
- 21.: Kerbe
- 22.: Flach-Profil
- 23.: Schraube
- 24.: Kederleiste
- 25.: Seil
- 26.: Schlaufe
- 27.: Falle
- 28.: Pfostenseil
- 29.: Tasche
- 30.: Membrane
- 31.: Dübel
- 32.: Schäkel
- 33.: Winkel-Profil
- 34.: Befestigungsmasse
- 35.: Anker
- 36.: Pumpenschacht
- 37.: Rohr
- 38.: unteres Fixierungsseil
- 39.: maximale Wasserhöhe
- 40.: Bereich
- 41.: Lasche
- 42.: Haken
- 43.: Pfeilrichtung
- 44.: Flachprofil
- 45.: Nut
- 46.: Abspannung
- 47.: Klammer
- 48.: Anker für Spundwände
- 49.: Spundwand
- 50.: Traufe
- 51.: Dach
- 52.: Pfeil
- 53.: Verlängerung
- 54.: Pfeilrichtung
- 55.: Klemmleiste
- 56.: Nut
- 57.: Bolzen
- 58.: Geländer
- 59.: Anschlag

## Patentansprüche

1. Hochwasserschutzwand mit in ortsfest angeordneten Aufnahmen eingesetzten Pfosten (1) und mindestens einem Wandelement, das in einer im Boden (5) versenkten ortsfesten und im Querschnitt zumindest im Wesentlichen U-förmigen Wanne (4) angeordnet und zur Bildung einer Schutzwand hochziehbar und mit den Pfosten (1) verbindbar ist, wobei das Wandelement zumindest teilweise aus einem flexiblen Material, das aus einer flüssigkeitsdichten Folie (10) und einem Stahl- oder Kunststoffnetz (11) oder einem Kunststoffgewebe besteht, wobei die beide mit der Wanne (4) oder dem unteren Bereich der Pfosten (1) verankert sind,
**dadurch gekennzeichnet, dass**
bei einer errichteten Hochwasserschutzwand außenseitig die Kunststofffolie (10) und binnenseitig das Stahl- oder Kunststoffnetz (11) oder Kunststoffgewebe angeordnet ist, so dass die Folie (10) die Dichtigkeit der Hochwasserschutzwand liefert und die Stabilität durch das Stahl- oder Kunststoffnetz (11) oder Kunststoffgewebe gewährleistet wird.

2. Hochwasserschutzwand nach Anspruch 1 , **dadurch gekennzeichnet, dass** die Folie (10) aus PVC oder einer anderen hochfesten Folie besteht, vorzugsweise mit einem Gewicht von mindestens 500 g/m².

3. Hochwasserschutzwand nach einem der Ansprüche 1 oder 2, **dadurch gekennzeichnet, dass** das Stahlnetz (11) ein Drahtgitter ist oder das Kunststoffnetz oder das Kunststoffgewebe aus kreuzweise verbundenen Strängen gewebt ist.

4. Hochwasserschutzwand nach einem der Ansprüche 1 bis 3, **dadurch gekennzeichnet, dass** die Folie (10) und/oder das Stahl- oder Kunststoffnetz (11) oder das Kunststoffgewebe als Rolle oder als Zick-Zack-Lage in der Wanne (4) lagert.

5. Hochwasserschutzwand nach einem der Ansprüche 1 bis 4, **dadurch gekennzeichnet, dass** die Pfosten (1) schwenkbar ausgebildet und ebenfalls in der Wanne (4) lagerbar sind, die vorzugsweise mit einem oder mehreren Deckeln (3) verschlossen ist.

6. Hochwasserschutzwand nach Anspruch 5, **dadurch gekennzeichnet, dass** die Deckel (3) als schwenkbarer oder steckbarer Pfosten ausgebildet sind.

7. Hochwasserschutzwand nach Anspruch 5 oder 6, **dadurch gekennzeichnet, dass** der Deckel (3) als Auflage oder Abstützung für die Folie (10) und das Stahl- oder Kunststoffnetz (11) oder Kunststoffgewebe im unteren Bereich dient, vorzugsweise in einer Winkelstellung zwischen 30° und 60° gegen eine Horizontallinie.

8. Hochwasserschutzwand nach einem der Ansprüche 1 bis 7, **dadurch gekennzeichnet, dass** zur unteren Befestigung der Folie (10) und des Stahl- oder Kunststoffnetzes (11) oder des Kunststoffgewebes ein Keder (19) oder eine Klemmleiste vorgesehen ist.

9. Hochwasserschutzwand nach einem der Ansprüche 1 bis 8, **dadurch gekennzeichnet, dass** die Folie (10) und/oder das Stahl- oder Kunststoffnetz (11) oder das Kunststoffgewebe an der Oberkante ein oberes Fixierungsseil (12) aufweist und/oder mit einer Schlinge oder einem Schlaufengurt verbunden sind, der jeweils im Kopfbereich der Pfosten (1) befestigbar ist.

10. Hochwasserschutzwand nach einem der Ansprüche 1 bis 9, **dadurch gekennzeichnet, dass** das Stahl- oder Kunststoffnetz (11) die Oberkante der Folie (10) überragt und im Abstand hierzu am Pfosten (1), einem Hausdach (51) oder einem anderen Fixierungspunkt befestigbar ist.

11. Hochwasserschutzwand nach einem der Ansprüche 1 bis 10, **gekennzeichnet durch** eine im Pfosten (1) längsaxial bewegbare Verlängerung (53), die aus dem Pfosten (1) bis zu einem Anschlagpunkt (59) herausgezogen werden kann und in einer Einrastposition ruht, so dass zur Erhöhung der maximalen Wasserhöhe (39) das Wandelement an der Verlängerung (53) befestigt wird, wobei die Verlängerung (53) vorzugsweise eine Nut (54) aufweist, in die im fixierten Zustand ein Bolzen (57) greift, der mit dem Pfosten (1) verbunden ist.

## Claims

1. Flood barrier with posts (1) inserted in stationary arranged seats and with at least one wall element which is arranged in an at least essentially U-shaped trough (4) sunk into the ground (5) stationary and which is hoistable for the formation of a protective wall and connectable with the posts (1), said wall element consisting at least in parts of a flexible material of a liquid-tight film (10) and a steel- or plastic-net (11) or a plastic fabric both being anchored with the trough or the lower area of the posts (1)
**characterized in that**
in case of an erected flood barrier the plastic film (10) is arranged outside and the steel- or plastic-net is arranged interior, so that the film (10) provides the impermeability of the flood barrier and the stability is ensured by the steel- or plastic net (11) or the plastic fabric.

2. Flood barrier according to claim 1, **characterized in that** the film (10) consists of PVC or another high-strength film, preferably with a weight of at least 500g/m².

3. Flood barrier according to one of the claims 1 or 2, **characterized in that** the steel net (11) is a wire mesh or the plastic net or the plastic fabric is woven by crosswise connected strands.

4. Flood barrier according to one of the claims 1 to 3, **characterized in that** the film (10) and/or the steel- or plastic-net (11) or the plastic fabric is stored as a roll or as a zig-zag-fold in the trough (4).

5. Flood barrier according to one of the claims 1 to 4, **characterized in that** the posts (1) are pivotally designed and storable too in the trough which is preferably closed with one or several lids (3).

6. Flood barrier according to one of the claims 1 to 5, **characterized in that** the lids (3) are designed as pivoted or plug-in posts.

7. Flood barrier according to one of the claims 5 or 6, **characterized in that** the lid (3) serves as abutment or support for the film (10) and the steel- or plastic-net (11) or plastic fabric in the lower area, preferably in an angularity between 30° and 60° in relation to a horizontal line.

8. Flood barrier according to one of the claims 1 to 7, **characterized in that** a welt (19) or a clamping band is provided for the lower fixation of the film (10) and the steel- or plastic-net (11) or the plastic fabric.

9. Flood barrier according to one of the claims 1 to 8, **characterized in that** the film (10) and/or the steel- or plastic-net (11) or the plastic fabric has an upper fixation-rope (12) and/or is connected with a loop or a suspension band which can be fastened to the head area of the posts (1).

10. Flood barrier according to one of the claims 1 to 9, **characterized in that** the steel- or plastic.net (11) project the upper edge of the film (10) and can be fastened spaced thereto on the posts (1), a rooftop (51) or another fixation-point.

11. Flood barrier according to one of the claims 1 to 10, **characterized by** a projection (53) movable longitudinal-axially in the posts (1) which can be pulled-out of the post (1) up to a stop point (59) and resting in a locking position, so that for increasing the maximum water height (39) the wall element is fastened to the projection (53) thereby the projection (53) has preferably a notch (54) wherein a bolt (57) engages which is connected with the post (1).

## Revendications

1. Paroi de protection contre les inondations, comprenant des poteaux (1) implantés dans des logements disposés à poste fixe et au moins un élément de paroi qui est disposé dans une cuve (4) fixe encastrée dans le sol (5) et ayant, en coupe transversale, une forme pour l'essentiel en U et qui, pour former une paroi de protection, peut être hissé et être relié aux poteaux (1), dans laquelle ledit élément de paroi est réalisé au moins en partie dans une matière flexible qui se compose d'un film étanche au liquide (10) et d'un filet en acier ou en matière plastique (11) ou d'un tissu en matière plastique, tout deux étant ancrés avec ladite cuve (4) ou l'autre zone des poteaux (1), **caractérisée par le fait que**, lorsqu'une paroi de protection contre les inondations est érigée, le film en matière plastique (10) est disposé sur la face extérieure et le filet en acier ou en matière plastique (11) ou le tissu en matière plastique est disposé sur la face intérieure de sorte que le film (10) fournit l'étanchéité de la paroi de protection contre les inondations et que la stabilité est assurée par le filet en acier ou en matière plastique (11) ou le tissu en matière plastique.

2. Paroi de protection contre les inondations selon la revendication 1, **caractérisée par le fait que** le film (10) se compose de PVC ou d'un autre film à haute résistance ayant de préférence un poids d'au moins 500 g/m².

3. Paroi de protection contre les inondations selon l'une quelconque des revendications 1 ou 2, **caractérisée par le fait que** le filet en acier (11) est un treillis en fil métallique ou que le filet en matière plastique ou le tissu en matière plastique est tissé à partir de brins reliés en croix.

4. Paroi de protection contre les inondations selon l'une quelconque des revendications 1 à 3, **caractérisée par le fait que** ledit film (10) et/ou le filet en acier ou en matière plastique (11) ou le tissu en matière plastique est stocké en tant que rouleau ou en tant que nappe en zig-zag dans ladite cuve (4).

5. Paroi de protection contre les inondations selon l'une quelconque des revendications 1 à 4, **caractérisée par le fait que** les poteaux (1) sont réalisés de manière à pouvoir pivoter et peuvent être stockés, eux aussi, à l'intérieur de la cuve (4) qui, de préférence, est fermée par un ou plusieurs couvercle(s) (3).

6. Paroi de protection contre les inondations selon la revendication 5, **caractérisée par le fait que** les couvercles (3) sont réalisés en tant que poteau apte à pivoter ou à être emboîté.

7. Paroi de protection contre les inondations selon la revendication 5 ou 6, **caractérisée par le fait que** le couvercle (3) sert d'appui ou de support audit film (10) ou au filet en acier ou en matière plastique (11) ou au tissu en matière plastique dans la zone inférieure, de préférence dans une position angulaire comprise entre 30° et 60° contre une ligne horizontale.

8. Paroi de protection contre les inondations selon l'une quelconque des revendications 1 à 7, **caractérisée par le fait que**, pour la fixation inférieure du film (10) et du filet en acier ou en matière plastique (11) ou du tissu en matière plastique, un bourrelet (19) ou une barre de serrage est prévu(e).

9. Paroi de protection contre les inondations selon l'une quelconque des revendications 1 à 8, **caractérisée par le fait que** ledit film (10) et/ou le filet en acier ou en matière plastique (11) ou le tissu en matière plastique présentent un câble de fixation supérieur (12) sur le bord supérieur et/ou sont reliés à une boucle et une ceinture en boucle qui peut être fixée respectivement dans la zone de tête des poteaux (1).

10. Paroi de protection contre les inondations selon l'une quelconque des revendications 1 à 9, **caractérisée par le fait que** ledit filet en acier ou en matière plastique (11) dépasse le bord supérieur du film (10) et peut être fixé à distance par rapport à ceci sur le poteau (1), sur un toit de maison (51) ou sur un autre point de fixation.

11. Paroi de protection contre les inondations selon l'une quelconque des revendications 1 à 10, **caractérisée par** une rallonge (53) qui peut être déplacée dans la direction de l'axe longitudinal dans le poteau (1) et peut être sortie dudit poteau (1) jusqu'à un point de butée (59) et est en repos dans une position d'enclenchement de sorte que, pour augmenter le niveau d'eau maximal (39), ledit élément de paroi est fixé sur la rallonge (53), la rallonge (53) présentant de préférence une rainure (54) dans laquelle, à l'état fixé, s'engage un boulon (57) qui est relié au poteau (1).
